(19) Europäisches Patentamt
European Patent Office
Office européen des brevets

(11) **EP 4 636 141 A1**

(12) **EUROPEAN PATENT APPLICATION**
published in accordance with Art. 153(4) EPC

(43) Date of publication:
**22.10.2025 Bulletin 2025/43**

(21) Application number: 23903952.2

(22) Date of filing: 12.12.2023

(51) International Patent Classification (IPC):
$D01F\ 6/62^{(2006.01)}$     $D01D\ 5/098^{(2006.01)}$
$D02G\ 3/02^{(2006.01)}$     $D02G\ 3/48^{(2006.01)}$

(52) Cooperative Patent Classification (CPC):
**D01D 5/098; D01F 6/62; D02G 3/02; D02G 3/48**

(86) International application number:
**PCT/KR2023/020408**

(87) International publication number:
**WO 2024/128749 (20.06.2024 Gazette 2024/25)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **14.12.2022 KR 20220175166**

(71) Applicant: **HS Hyosung Advanced Materials
Corporation
Seoul 04144 (KR)**

(72) Inventors:
• **PARK, Kyungmin
Hwaseong-si, Gyeonggi-do 18413 (KR)**
• **NAM, Yoonhee
Seoul 07295 (KR)**
• **PARK, Jin-Kyung
Yongin-si, Gyeonggi-do 16807 (KR)**
• **JOO, Si-Hwan
Sejong 30100 (KR)**

(74) Representative: **Westphal, Mussgnug & Partner
Patentanwälte mbB
Am Riettor 5
78048 Villingen-Schwenningen (DE)**

(54) **RECYCLED POLYETHYLENE TEREPHTHALATE YARN AND RECYCLED POLYETHYLENE TEREPHTHALATE TIRE CORD**

(57) A method for producing a recycled polyethylene terephthalate yarn according to the present invention includes: melting recycled polyethylene terephthalate chips and spinning the melt through a spinning nozzle, thereby producing a spun yarn; and drawing the spun yarn in multiple stages using an apparatus including five or more sets of drawing godet rolls, followed by winding; wherein the recycled polyethylene terephthalate chips contain isophthalic acid in an amount of 1.0 mol% or less; wherein the drawing is performed at a draw ratio of 1.5 to 2.45; and wherein a fourth set of godet rolls among the five or more sets of drawing godet rolls has a speed of 5,500 m/min to 7,000 m/min. The recycled polyethylene terephthalate yarn produced by the production method has a tenacity of 8.5 g/d or more and a dimensional stability (E-S) of 11.0% or less.

FIG. 1

## Description

### Technical Field

The present invention relates to a recycled polyethylene terephthalate yarn and a recycled polyethylene terephthalate tire cord.

### Background Art

Since the beginning of the 20th century, mankind has pursued production efficiency improvements by introducing mass production methods under the leadership of advanced countries, and as industrialization has speed up, the era of mass production and mass consumption has begun. As a result, convenience of life has increased significantly, but environmental problems have emerged due to the deterioration of the global environment.

Among synthetic resins, polyethylene terephthalate has excellent chemical stability, and thus it is mass-produced and widely used in various industrial fields. However, the disposal of polyethylene terephthalate waste, which is generated in large quantities along with the increase in production and usage of polyethylene terephthalate, has become a major social problem. In particular, the problem of disposing of polyethylene terephthalate (PET) bottles, which have a large volume versus weight, among polyethylene terephthalate waste, is becoming more serious.

Accordingly, countries such as the US and Europe are applying recycled polyethylene terephthalate to various industries depending on changes in the external environment (strengthening regulations, environmental groups, and preemptive responses to climate change). Also, in the tire and tire cord market, there is a need for products that use recycled polyethylene terephthalate.

However, tire cords produced using recycled polyethylene terephthalate have the problem of having poor molding processability, compared to tire cords produced using virgin polyethylene terephthalate, and having reduced marketability due to not only poor physical properties such as poor impact resistance and poor heat resistance but also poor appearance.

Therefore, there is a demand for a technology that is capable of minimizing property degradation while being environmentally friendly by using recycled polyethylene terephthalate.

[Prior Art Literature]

[Patent Document]

KR 10-2011-0026707 A

### Disclosure

### Technical Problem

An object of the present invention is to provide a recycled polyethylene terephthalate yarn which, by using recycled polyethylene terephthalate, has minimal deterioration in physical properties compared to one produced using virgin polyethylene terephthalate while being environmentally friendly, and a tire cord using the same.

### Technical Solution

A method for producing a recycled polyethylene terephthalate yarn according to the present invention includes: melting recycled polyethylene terephthalate chips and spinning the melt through a spinning nozzle, thereby producing a spun yarn; and drawing the spun yarn in multiple stages using an apparatus including five or more sets of drawing godet rolls, followed by winding; wherein the recycled polyethylene terephthalate chips contain 1.0 mol% or less of isophthalic acid; wherein the drawing is performed at a draw ratio of 1.5 to 2.45; and wherein a fourth set of godet rolls among the five or more sets of drawing godet rolls has a speed of 5,500 m/min to 7,000 m/min.

The recycled polyethylene terephthalate yarn according to the present invention may have a tenacity of 8.5 g/d or more and a dimensional stability (E-S) of 11.0% or less.

The recycled polyethylene terephthalate yarn according to the present invention may have a crystallinity of 40.0% or more.

The recycled polyethylene terephthalate yarn according to the present invention may have a crystal size in terms of Miller index (010) of 40.0 Å or more.

A recycled polyethylene terephthalate tire cord according to the present invention is produced by a production method including: producing a raw cord by twisting the recycled polyethylene terephthalate yarn; producing a fabric by weaving the raw cord; and dipping the fabric in a dipping solution, and has a tenacity of 6.5 g/d or more and a dimensional stability (E-S) of 6.3% or less.

The recycled polyethylene terephthalate tire cord according to the present invention may have a breaking strength retention rate of 80% or more and a fatigue resistance of 75% or more.

## Advantageous Effects

The recycled polyethylene terephthalate yarn and recycled polyethylene terephthalate tire cord according to the present invention are environmentally friendly and have excellent physical properties.

## Description of Drawings

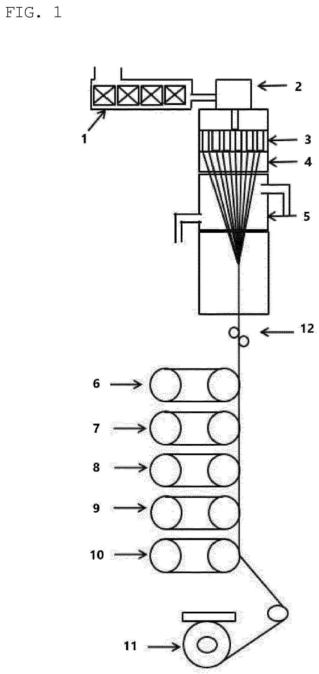

FIG. 1 illustrates an apparatus for performing processes such as spinning, multi-stage drawing, and winding of a polyethylene terephthalate yarn according to one embodiment of the present invention.

## Mode for Carrying Out the Invention

The present invention will be described in detail below.

In the present specification, "recycled polyethylene terephthalate" means polyethylene terephthalate that has been discarded after use in specific applications, such as containers, fibers, tire cords, etc., and then recycled for the purpose of recycling. In the present specification, the recycled polyethylene terephthalate may be mechanically recycled polyethylene terephthalate and/or chemically recycled polyethylene terephthalate.

In the present specification, "virgin polyethylene terephthalate" refers to non-recycled polyethylene terephthalate which is distinguished from the "recycled polyethylene terephthalate."

Isophthalic acid is an isomer of terephthalic acid. Generally, recycled polyethylene terephthalate contains isophthalic acid. In particular, polyethylene terephthalate for containers, which is used for PET bottles, contains isophthalic acid to facilitate processing, and thus recycled polyethylene terephthalate made by recycling the same contains 1 mol% to 5 mol% of isophthalic acid.

Since isophthalic acid inhibits the crystallinity and crystal size increase during yarn production, yarns produced using polyethylene terephthalate containing isophthalic acid have low tenacity and thermal stability. Such yarns are not desirable for tire cord production because their breaking strength is reduced during the tire cord production process.

To produce yarns having a tenacity equal to virgin polyethylene terephthalate from recycled polyethylene terephthalate containing isophthalic acid, the draw ratio should be increased.

However, when the draw ratio is increased, the tie chain connecting the crystalline and amorphous regions is cut, which causes deterioration in the physical properties of the yarn, such as a decrease in breaking strength retention rate and fatigue resistance. In addition, when the draw ratio is increased, the orientation of the amorphous region develops, which increases the heat shrinkage rate of the yarn, causing uneven shrinkage during post-processing.

The present inventors have found that, when recycled polyethylene terephthalate chips having an isophthalic acid content of 1.0 mol% or less are used, the draw ratio can be lowered compared to conventional ones.

In addition, the present inventors have found that a yarn and tire cord produced by using recycled polyethylene terephthalate chips having an isophthalic acid content of 1.0 mol% or less and drawing at a draw ratio of 1.5 to 2.45 have physical properties comparable to those of a yarn and tire cord produced using virgin polyethylene terephthalate chips.

## Production of Recycled Polyethylene Terephthalate Yarn

A recycled polyethylene terephthalate yarn may be produced by melting recycled polyethylene terephthalate chips containing 1.0 mol% or less of isophthalic, spinning the melt through a spinning nozzle to produce a spun yarn, and drawing the spun yarn in multiple stages using an apparatus including five or more sets of drawing godet rolls, followed by winding.

At this time, the recycled polyethylene terephthalate chips may preferably contain 1.0 mol% or less, more preferably 0.5 mol% or less, most preferably 0.4 mol% or less of isophthalic acid, or may not contain isophthalic acid. If the recycled polyethylene terephthalate chips contain more than 1.0 mol% of isophthalic acid, the crystallinity and the increase in crystal size may be suppressed during yarn production, which may result in lower tenacity and thermal stability of the yarn, and the breaking strength may be lowered in the tire cord production process. Meanwhile, the recycled polyethylene terephthalate chips may not contain isophthalic acid, and in this case, the recycled polyethylene terephthalate chips may be, for example, chemically recycled polyethylene terephthalate chips, without being limited thereto.

First, referring to FIG. 1, recycled polyethylene terephthalate chips are melted in an extruder 1 at a temperature of 285°C, and extruded while passing through a gear pump 2 and a spinning nozzle 3 to produce a spun yarn. Thereafter, the spun yarn is solidified by passing through a cooling zone 5.

In the present invention, it is preferable to use a spinning filter of 300 mesh to 600 mesh during spinning. This is to remove foreign substances and impurities remaining without being removed in a process step of recycling PET chips and to make the fineness of the multifilament uniform by forming a uniform pressure in the chips remaining in the pack.

Meanwhile, the spun yarn may pass through a heating device 4 before passing through the cooling zone 5, if necessary. The zone where the heating device 4 is installed is called a delayed cooling zone or a heating zone, and this zone has a length of 100 mm to 600 mm and a temperature (air-contact surface temperature) of 300°C to 380°C.

In the cooling zone 5, depending on a method of blowing cooling air, an open quenching method, a circular closed quenching method, a radial outflow quenching method, or a radial inflow quenching method may be applied, without being limited thereto.

At this time, the temperature of the cooling air that is injected into the cooling zone 5 for quenching is adjusted to a temperature of 20°C to 50°C. This quenching using a sudden temperature difference between the hood and the cooling zone 5 is intended to increase the solidification point of the spun polymer and the spinning tension, thereby increasing the orientation of the spun yarn and the formation of linkage chains between crystals. If the cooling air temperature is below 20°C or above 50°C, a problem may arise in that fusion between the spun yarns occurs, resulting in deterioration in the physical properties and appearance quality of the yarn.

Thereafter, the yarn solidified by passage through the cooling zone 5 may be oiled with 0.5 to 1.5 wt% of an oil by passage through an oil application device 12 in order to increase the drawability of the yarn and thermal efficiency while reducing the coefficient of friction between the single yarns.

The oiled spun yarn may be passed through a first set of godet rolls 6 to form an undrawn yarn. At this time, the speed of the first set of godet rolls 6 is preferably 2,200 m/min to 4,500 m/min. If the speed of the first set of godet rolls 6 is less than 2,200 m/min, the cross-sectional uniformity of the yarn may deteriorate, which lowers the drawing workability, and the degree of orientation of the undrawn yarn may decrease and the crystalline region may not develop. In this case, thermal stability may be lowered during drawing and dipping, so that the breaking strength of the tire cord may be lowered, and when high drawing is performed to improve the breaking strength and modulus, the dimensional stability may be reduced. In addition, if the speed of the first set of godet rolls 6 is more than 4,500 m/min, the drawability of the undrawn yarn may be reduced, which may lower the tenacity and drawing workability of the yarn.

The spun yarn is subjected to multi-stage hot drawing by passage through five sets of drawing godet rolls 6, 7, 8, 9 and 10 and wound, thereby producing the recycled polyethylene terephthalate yarn of the present invention. Although five sets of godet rolls 6, 7, 8, 9 and 10 are illustrated in FIG. 1, the present invention is not limited thereto, and more than five sets of godet rolls may be included.

The speed of the first set of godet rolls 6 may be 2,200 m/min to 4,500 m/min, the speed of the second set of godet rolls 7 may be 1.1 to 1.4 times the speed of the first set of godet rolls 6, and the speed of the third set of godet rolls 8 may be 1.1 to 1.3 times the speed of the second set of godet rolls 7.

The speed of the fourth set of godet rolls 9 may be 5,500 m/min to 7,000 m/min. When the speed of the fourth set of godet rolls 9 is 5,500 m/min to 7,000 m/min, the orientation of the undrawn yarn may be increased, and accordingly, even if the breaking strength of the yarn is similar, the modulus may be increased and the dimensional stability may be improved.

The speed of the fifth set of godet rolls 10 may be lower by 50 m/min to 150 m/min than the speed of the fourth set of godet rolls 9.

In the multi-stage hot-drawing process, the temperature of each of the godet roll sets is preferably between 40°C and 240°C. If the temperature of the godet roll sets is below 40°C, a problem may arise in terms of achieving high-tenacity properties by cold drawing, and if the temperature is above 240°C, which approaches the melting point of the resin, a problem may arise in that multifilaments are fused together, so that single yarn breakage occurs, which deteriorates the appearance of the yarn, or complete yarn breakage occurs.

In one embodiment, the draw ratio of the recycled polyethylene terephthalate yarn may be 2.45 or less. The draw ratio may preferably be 2.4 or less, most preferably 2.35 or less. If the draw ratio is more than 2.45, the tie chain connecting the crystalline and the amorphous regions may be cut, which may result in deterioration in the physical properties of the yarn, such as a decrease in breaking strength retention rate and fatigue resistance, and the orientation of the amorphous region may develop, which may increase the heat shrinkage rate of the yarn, resulting in uneven shrinkage during post-processing. In another embodiment, the draw ratio of the recycled polyethylene terephthalate yarn may be 1.5 or more. If the draw ratio is less than 1.5, productivity may be reduced and the tenacity and dimensional stability of the yarn and the tire cord may be reduced.

The draw ratio is the ratio between the highest and lowest speeds of the godet roll sets in the multi-stage drawing step. In one embodiment, the speed of the fourth set of godet rolls 9 may be the highest and the speed of the first set of godet rolls 6 may be the lowest. In this case, the draw ratio may be the speed of the fourth set of godet rolls 9/the speed of the first set of godet rolls 6.

After the drawing process, the drawn yarn is wound according to a general method, thereby producing the recycled polyethylene terephthalate yarn.

The speed of a winding roller 11 is preferably 5,000 m/min to 6,500 m/min. If the speed of the winding roller 11 is less than 5,000 m/min, productivity may decrease, and if the speed of the winding roller 11 is more than 6500 m/min, yarn breakage may occur during winding, which may decrease workability.

The recycled polyethylene terephthalate yarn according to the present invention, produced by the above-described method, may have a crystallinity of 40.0% or more, a crystal size in terms of Miller index (010) of 40.0 Å or more, a tenacity of 8.5 g/d or more, and a dimensional stability (E-S) of 11.0% or less, and thus may have physical properties similar to those of virgin polyethylene terephthalate yarn. In a preferred embodiment, the recycled polyethylene terephthalate yarn according to the present invention may have a crystallinity of 40.0% to 60.0%, a crystal size in terms of Miller index (010) of 40.0 Å to 60.0 Å, a tenacity of 8.5 g/d to 12.0 g/d, and a dimensional stability (E-S) of 6.0% to 11.0%.

This is because the tie-chain breakage and the orientation of the amorphous region of the recycled polyethylene terephthalate yarn according to the present invention are less than those of a conventional recycled polyethylene terephthalate yarn.

## Production of Recycled Polyethylene Terephthalate Tire Cord

A recycled polyethylene terephthalate tire cord may be produced by twisting the recycled polyethylene terephthalate yarn to produce a raw cord for a tire cord, weaving the raw cord to produce a fabric, and dipping the fabric in a dipping solution.

The raw cord is produced by twisting the recycled polyethylene terephthalate yarn. Specifically, the raw cord is produced by ply twisting the recycled polyethylene terephthalate yarn, followed by cable twisting. In this case, the ply twist and the cable twist have the same twist number (level of twist) or have different twist numbers as needed.

In the present invention, the twist number may be 300 (ply twist number)/300 (cable twist number) TPM (twist per meter) to 500/500 TPM. When the ply twist number is the same as the cable twist number, the produced raw cord may be easily maintained in a straight line without showing rotation or twist, so that the physical properties thereof may be maximized. At this time, if the number of ply twists/cable twists is less than 300/300 TPM, the elongation at break of the raw cord may be reduced and the fatigue resistance thereof may be likely to decrease, and if the number of ply twists/cable twists is more than 500/500 TPM, the raw cord will be not suitable for use as a tire cord due to a great decrease in the breaking strength thereof.

The produced raw cord may be woven using a weaving machine, and the resulting fabric may be dipped in a dipping solution and then cured, thereby producing a tire cord having a resin layer attached to the surface of the raw cord.

Dipping is intended to overcome the disadvantage of a tire cord fiber having poor adhesion to rubber. As described above, the fabric is dipped in a dipping solution to impregnate the fiber surface with a resorcinol formaldehyde latex (RFL) resin layer.

First, the fabric is dipped in an adhesive solution containing epoxy resin and RFL, dried in a drying zone at 120°C to 220°C under a stretching of 2.0% to 6.0% for 100 to 200 seconds, and heat-set in a high-temperature zone at 220°C° to 270°C under a stretching of 1.0% to 5.0% for 100 to 200 seconds.

Thereafter, the fabric is dipped again in an adhesive solution prepared as follows. The adhesive solution prepared as follows is only an example.

The adhesive solution may be prepared by preparing a solution containing 45.6 parts by weight of 29.4 wt% resorcinol, 255.5 parts by weight of pure water, 20 parts by weight of 37% formalin, and 3.8 parts by weight of 10 wt% sodium hydroxide, stirring and reacting the solution at 25°C for 5 hours, adding 300 parts by weight of 40 wt% VP-latex, 129 parts by weight of pure water, and 23.8 parts by weight of 28% ammonia water thereto, and aging the mixture at 25°C for 20 hours to maintain a solid concentration of 19.05%.

After dipping in the adhesive solution, the fabric is dried for 50 to 150 seconds at 120°C to 220°C under a stretching of 0 to 3%. The amount of adhesive attached is preferably 2 to 7% (on a solid content basis) of the fabric weight. In order to control the amount of adhesive attached, it is preferable to apply a stretching of 0 to 3% during drying, and it is more preferable to apply a stretching of 1 to 2%. If the stretching is more than 3%, the amount of adhesive attached (DPU) may be controlled, but the elongation at break may decrease, which may result in a decrease in fatigue resistance. If the stretching is lowered to less than 0%, the dipping solution may penetrate into the fabric, making it impossible to control the DPU.

After drying, the fabric is heat-set at 220°C to 270°C under a stretching of 3% to 6% for 20 to 60 seconds. If the heat-setting time is less than 20 seconds, the reaction time of the adhesive solution may be insufficient, resulting in a decrease in the adhesive strength, and if the heat-setting time is more than 60 seconds, the hardness of the adhesive solution may increase, resulting in a decrease in the fatigue resistance of the tire code.

Although the present invention mainly describes a case where dipping is performed using a two-bath dipping process, it will be obvious to those skilled in the art that it is possible to perform heat treatment under the same conditions using a one-bath dipping process.

The recycled polyethylene terephthalate tire cord according to the present invention, produced by the above-described method, may have a tenacity of 6.5 g/d or more, a breaking strength retention rate of 80% or more, a dimensional stability (E-S) of 6.3% or less, and a fatigue resistance of 75% or more, and thus may have physical properties similar to those of a virgin polyethylene terephthalate tire cord.

Hereinafter, the present invention will be described by way of examples and comparative examples. The following examples are intended only to explain the present invention in detail, and the scope of the present invention is not limited to the following examples.

**Examples and Comparative Examples**

Example 1

A spun yarn was produced by melting recycled polyethylene terephthalate chips containing no isophthalic acid and spinning the melt through a nozzle, and a yarn was produced by drawing the spun yarn in multiple stages under the drawing conditions shown in Table 1 below, followed by winding.

Two strands of the produced yarn were twisted at 370 TPM to produce a raw cord, which was then woven to produce a fabric. The fabric was dipped in epoxy resin and RFL, dried in a drying zone at 170°C under a stretch of 4.0% for 150 seconds, and heat-set in a high-temperature zone at 245°C under a stretching of 3.0% for 150 seconds. Then, the fabric was dipped in an adhesive solution prepared as follows, dried at 170°C under a stretching of 1.5% for 100 seconds, and heat-set at 245°C under a stretching of 4.5% for 40 seconds, thereby producing a tire cord.

<Preparation of Adhesive Solution>

The adhesive solution was prepared by preparing a solution containing 45.6 parts by weight of 29.4 wt% resorcinol, 255.5 parts by weight of pure water, 20 parts by weight of 37% formalin, and 3.8 parts by weight of 10 wt% sodium hydroxide, stirring and reacting the solution at 25°C for 5 hours, adding 300 parts by weight of 40 wt% VP-latex, 129 parts by weight of pure water, and 23.8 parts by weight of 28% ammonia water thereto, and aging the mixture at 25°C for 20 hours to maintain a solid concentration of 19.05%.

Examples 2 and 3 and Comparative Examples 2 and 3

The yarns and tire cords of Examples 2 and 3 and Comparative Examples 2 and 3 were produced in the same manner as in Example 1, except that the isophthalic acid content of the recycled polyethylene terephthalate chips or the drawing conditions were changed.

Comparative Example 1

A yarn and a tire cord were produced in the same manner as in Example 1, except that virgin polyethylene terephthalate chips were used instead of the recycled polyethylene terephthalate chips.

**Experimental Example - Physical Properties of Yarns and Tire Cords**

The physical properties of the yarns and tire cords of the Examples and the Comparative Examples were measured using the following methods. The measurement results are shown in Table 1 below.

1) Crystallinity

Crystallinity was measured by the density method using a density gradient tube. The crystallinity (X) was calculated according to the following Equation wherein $\rho_c$ is the density of the crystalline region, $\rho_a$ is the density of the amorphous region, and $\rho$ is the density of the sample.

$$X(\%) = (\rho_c - \rho) / (\rho_c - \rho_a) \times 100$$

2) Crystal Size

The crystal size (C.S.) was calculated according to the following Equation, based on the analysis the (010) diffraction peak from the diffraction pattern obtained by wide-angle X-ray diffraction analysis using an X-ray with $\lambda = 1.5428$

Å.

$$\text{Crystal size} = (K\lambda) / (\beta \cos\theta)$$

K: Scherrer constant
λ: X-ray wavelength (1.5428 **Å**)
β: half width
θ: Bragg angle

3) Tenacity and Breaking Strength

After leaving the yarns and cords at 25°C and 65% relative humidity for 24 hours, the tenacities of the specimens were measured using a tensile tester according to ASTM D885.

4) Elongation at Specific Load (E)

For the yarn, the elongation at specific load refers to the elongation at a load of 4.5 g/d in the elongation-load curve obtained using a low-speed elongation tensile tester (Instron) according to ASTM D885.
For the tire code, the elongation at specific load refers to the elongation at a load of 2.25 g/d in the elongation-load curve obtained using a low-speed elongation tensile tester (Instron) according to ASTM D885.

5) Shrinkage (S) (%)

Using the ratio of the length (L0), measured using a Testrite shrinkage tester at a static load of 0.05 g/d after standing at 25°C and 65% relative humidity for 24 hours, to the length (L1) measured after treatment at a static load of 0.05 g/d at 177°C for 2 minutes, shrinkage (%) was calculated according to the following Equation:

$$S (\%) = \{(L0 - L1) / L0\} * 100$$

6) Dimensional Stability (E-S)

Dimensional stability (E-S) = Elongation at specific load + shrinkage

In addition to the method of measuring dimensional stability, the significance of dimensional stability is specifically explained as follows.
In general, when a tire is vulcanized, the shrinkage and elongation of the tire change. The sum of the shrinkage and elongation can be considered similar to the concept of modulus of the cord after the tire is completely manufactured.
That is, a correlation in which a lower E-S value leads to a higher modulus is formed. When the modulus is high, the amount of force generated by the tire deformation is large, and thus steering becomes easier, and conversely, less deformation is required to create the same level of tension, and thus steering performance improves and dimensional stability according to deformation can be judged to be excellent. Therefore, the E-S value is used as a physical property value to judge the excellence of code performance during tire manufacturing.
In addition, during tire manufacturing, a tire with a low E-S value has a small amount of heat-induced deformation, which has the effect of improving the uniformity of the tire, and thus has the effect of improving the uniformity of the entire tire. Therefore, in the case of a tire using a code with a low E-S value, tire uniformity of the tire is higher than that of a tire using a code with a high E-S value, and thus tire performance can be improved.
7) Breaking strength Retention rate Breaking strength retention rate (%) = cord breaking strength / (yarn breaking strength * ply number) * 100

8) Fatigue Resistance

The fatigue resistance was determined by measuring he breaking strength after the fatigue test using a belt fatigue tester and dividing the same by the breaking strength before the fatigue test.

The fatigue test conditions were a load of 80 kgf, a spindle radius of 12.7 mm, and 37,500 belt fatigue cycles.

Fatigue resistance (%) = breaking strength after fatigue test / breaking strength before fatigue test * 100

[Table 1]

| Category | | Example 1 | Example 2 | Example 3 | Comparative Example 1 | Comparative Example 2 | Comparative Example 3 |
|---|---|---|---|---|---|---|---|
| Chips | Type | Recycled | Recycled | Recycled | Virgin | Recycled | Recycled |
| | Isophthalic acid (mol%) | 0 | 0.3 | 0.4 | 0 | 1.1 | 1.4 |
| Drawing Conditions | GR 1 speed (m/min) | 2400 | 2350 | 2350 | 2400 | 2240 | 2150 |
| | GR 4 speed (m/min) | 5500 | 5500 | 5500 | 5500 | 5500 | 5500 |
| | Draw ratio | 2.29 | 2.34 | 2.34 | 2.29 | 2.46 | 2.56 |
| Yarn | Crystallinity (%) | 46.7 | 44.2 | 43.9 | 46.8 | 39.9 | 39.1 |
| | Crystal size (Å, 010) | 45.4 | 43.0 | 42.6 | 45.6 | 39.6 | 39.0 |
| | Tenacity (g/d) | 8.8 | 8.8 | 8.7 | 8.8 | 8.7 | 8.7 |
| | Elongation (%) at specific load | 5.7 | 5.7 | 5.8 | 5.6 | 5.9 | 5.8 |
| | Shrinkage (%) | 5.1 | 5.2 | 5.2 | 5.2 | 6.5 | 7.2 |
| | Dimensional stability (%) | 10.8 | 10.9 | 11.0 | 10.8 | 12.4 | 13.0 |
| Tire Cord | Tenacity (g/d) | 6.9 | 7.0 | 6.8 | 7.0 | 6.3 | 6.3 |
| | Breaking strength retention rate(%) | 86.3 | 87.6 | 86.4 | 87.5 | 79.7 | 80.0 |
| | Elongation (%) at specific load | 3.5 | 3.7 | 3.6 | 3.4 | 3.5 | 3.4 |
| | Shrinkage (%) | 2.4 | 2.6 | 2.3 | 2.5 | 3 | 3.2 |
| | Dimensional stability (%) | 5.9 | 6.3 | 5.9 | 5.9 | 6.5 | 6.6 |
| | Fatigue resistance (%) | 80 | 76 | 78 | 81 | 69 | 67 |

It can be confirmed that the physical properties of the yarns and tire cords of Examples 1 to 3, which contain 1.0 mol% or less of isophthalic acid and have a draw ratio of 2.45 or less, are almost similar to the physical properties of the yarn and tire cord of Comparative Example 1. In contrast, it can be confirmed that the physical properties of the yarns and tire cords of Comparative Examples 2 and 3, which contain more than 1.0 mol% of isophthalic acid, are inferior to those of Examples 1 to 3 and Comparative Example 1.

The present invention may be variously modified and may have various forms, and therefore, the present invention is not limited to the specific form disclosed, but should be understood to include all modifications, equivalents, or substitutes included in the spirit and technical scope of the present invention.

[Description of Reference Numerals]

1: Extruder
2: Gear pump
3: Spinning nozzle
4: Heating device
5: Cooling zone
6: First set of godet rolls (GR1)
7: Second set of godet rolls (GR2)
8: Third set of godet rolls (GR3)
9: Fourth set of godet rolls (GR4)
10: Fifth set of godet rolls (GR5)
11: Winding roller
12: Oil supply device

**Claims**

1. A method for producing a recycled polyethylene terephthalate yarn, the method comprising:

    melting recycled polyethylene terephthalate chips and spinning the melt through a spinning nozzle, thereby producing a spun yarn; and
    drawing the spun yarn in multiple stages using an apparatus comprising five or more sets of drawing godet rolls, followed by winding;
    wherein the recycled polyethylene terephthalate chips contain 1.0 mol% or less of isophthalic acid;
    wherein the drawing is performed at a draw ratio of 1.5 to 2.45; and
    wherein a fourth set of godet rolls among the five or more sets of drawing godet rolls has a speed of 5,500 m/min to 7,000 m/min.

2. A recycled polyethylene terephthalate yarn produced by the method of claim 1 and having a tenacity of 8.5 g/d or more and a dimensional stability (E-S) of 11.0% or less.

3. The recycled polyethylene terephthalate yarn of claim 2, having a crystallinity of 40.0% or more.

4. The recycled polyethylene terephthalate yarn of claim 2, having a crystal size in terms of Miller index (010) of 40.0 Å or more.

5. A recycled polyethylene terephthalate tire cord produced by a production method comprising:

    producing a raw cord by twisting the recycled polyethylene terephthalate yarn of any one of claims 2 to 4;
    producing a fabric by weaving the raw cord; and
    dipping the fabric in a dipping solution;
    the recycled polyethylene terephthalate tire cord having a tenacity of 6.5 g/d or more and a dimensional stability (E-S) of 6.3% or less.

6. The recycled polyethylene terephthalate tire cord of claim 5, having a breaking strength retention rate of 80% or more and a fatigue resistance of 75% or more.

FIG. 1

## INTERNATIONAL SEARCH REPORT

| International application No. |
| --- |
| **PCT/KR2023/020408** |

| A. | CLASSIFICATION OF SUBJECT MATTER |
| --- | --- |

**D01F 6/62**(2006.01)i; **D01D 5/098**(2006.01)i; **D02G 3/02**(2006.01)i; **D02G 3/48**(2006.01)i

According to International Patent Classification (IPC) or to both national classification and IPC

| B. | FIELDS SEARCHED |
| --- | --- |

Minimum documentation searched (classification system followed by classification symbols)

D01F 6/62(2006.01); B60C 15/06(2006.01); B60C 9/00(2006.01); D01D 5/088(2006.01); D02G 1/02(2006.01); D02G 1/04(2006.01); D02G 3/48(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 재생 폴리에틸렌 테레프탈레이트(recycled polyethylene terephthalate), 원사 (yarn), 타이어코드(tire cord), 이소프탈산(isophthalic acid), 연신비(draw ratio), 속도(speed)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | KR 10-2022-0132992 A (KOLON INDUSTRIES, INC.) 04 October 2022 (2022-10-04)<br>See paragraphs [0041]-[0044], [0047], [0075], [0101], [0107]-[0112] and [0146]-[0149]. | 1-6 |
| Y | KR 10-2014-0030818 A (HYOSUNG CORPORATION) 12 March 2014 (2014-03-12)<br>See paragraphs [0011]-[0013], [0016]-[0018], [0034], [0045], [0049] and [0113]; tables 2 and 4; and figure 1. | 1-6 |
| A | KR 10-2022-0009061 A (HYOSUNG ADVANCED MATERIALS CORPORATION) 24 January 2022 (2022-01-24)<br>See entire document. | 1-6 |
| A | KR 10-2022-0058177 A (CHOI, Man Sick) 09 May 2022 (2022-05-09)<br>See entire document. | 1-6 |
| A | JP 2018-130974 A (YOKOHAMA RUBBER CO., LTD.) 23 August 2018 (2018-08-23)<br>See entire document. | 1-6 |

| ☐ Further documents are listed in the continuation of Box C. | ☑ See patent family annex. |
| --- | --- |

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **01 April 2024** | **01 April 2024** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2023/020408**

| Patent document cited in search report | | | Publication date (day/month/year) | Patent family member(s) | | | Publication date (day/month/year) |
|---|---|---|---|---|---|---|---|
| KR | 10-2022-0132992 | A | 04 October 2022 | CN | 116964260 | A | 27 October 2023 |
| | | | | EP | 4296416 | A1 | 27 December 2023 |
| | | | | WO | 2022-203183 | A1 | 29 September 2022 |
| KR | 10-2014-0030818 | A | 12 March 2014 | KR | 10-1384670 | B1 | 14 April 2014 |
| KR | 10-2022-0009061 | A | 24 January 2022 | None | | | |
| KR | 10-2022-0058177 | A | 09 May 2022 | None | | | |
| JP | 2018-130974 | A | 23 August 2018 | None | | | |

Form PCT/ISA/210 (patent family annex) (July 2022)

**EP 4 636 141 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020110026707 A